# EUROPEAN PATENT APPLICATION

(11) **EP 4 303 606 A1**
(43) Date of publication of application: **10.01.2024**
(21) Application number: 22182822.1
(22) Date of filing: 04.07.2022
(51) Int. Cl.: G01S 5/02, G01S 5/00, G01S 19/43

(54) **METHOD FOR SETTING UP A REAL-TIME LOCALIZATION SYSTEM AND/OR FOR GENERATING AND/OR PROVIDING A POSITIONING INFORMATION REGARDING A PLURALITY OF OBJECTS WITHIN A PREDEFINED AREA OR REGION, SYSTEM OR MOBILE COMMUNICATION NETWORK, POSITIONING SERVER ENTITY OR FUNCTIONALITY OR NETWORK-BASED POSITIONING SERVICE, PROGRAM AND COMPUTER-READABLE MEDIUM**

(71) Applicant: Deutsche Telekom AG, 53113 Bonn (DE)
(72) Inventor: KADELKA, Arndt, 50933 Cologne (DE)
(74) Representative: Schwöbel, Thilo K.

(57) **Abstract**

The invention relates to a method for setting up a real-time localization system and/or for generating and/or providing a positioning information regarding a plurality of objects, wherein in a predefined area or region a positioning server entity or functionality and a mobile communication network is used, wherein the plurality of objects comprises at least one specific object, wherein a plurality of positioning base station entities are located within the predefined area or region and wherein each of the plurality of positioning base station entities comprises a global navigation satellite system receiver functionality and a real-time kinematic positioning functionality, wherein the position of the specific object is able to be determined, using at least one positioning base station entity, by means of radiofrequency, optical and/or acoustical signals between the specific object and the at least one positioning base station entity, wherein, in order to set up a real-time localization system and/or to generate and/or provide a positioning information regarding a plurality of objects, the method comprises the following steps:
-- in a first step, the plurality of positioning base station entities are installed and the plurality of positioning base station entities and the positioning server entity or functionality are connected to or are part of the mobile communication network,
-- in a second step, the position of each of the plurality of positioning base station entities is determined using the global navigation satellite system receiver functionality and the real-time kinematic positioning functionality.

## Description

### BACKGROUND

The present invention relates a method for setting up a real-time localization system and/or for generating and/or providing a positioning information regarding a plurality of objects, wherein in a predefined area or region a positioning server entity or functionality and a mobile communication network is used, wherein a plurality of positioning base station entities are located within the predefined area or region.

Furthermore, the present invention relates to a system or mobile communication network for setting up a real-time localization system and/or for generating and/or providing a positioning information regarding a plurality of objects, wherein in a predefined area or region a positioning server entity or functionality and the mobile communication network is used, wherein a plurality of positioning base station entities are located within the predefined area or region.

Additionally, the present invention relates to a positioning server entity or functionality or network-based positioning service as part of a system or a mobile communication network according to the present invention.

Furthermore, the present invention relates to a program and to a computer-readable medium for setting up a real-time localization system and/or for generating and/or providing a positioning information regarding a plurality of objects within a predefined area or region using a positioning server entity or functionality and a mobile communication network according to the inventive method.

It is conventionally known to provide positioning services, e.g. in an industrial context, production environments, logistic processes or the like. Currently, real-time localization systems, RTLS, are known that may provide positioning services having a comparatively high accuracy, e.g. down to 10 cm accuracy or even less. Typically, such systems are installed in dedicated environments like within factories or indoors where specific infrastructures are provided; typically, ultra-wideband-based, UWB-based, systems provide solutions for these kinds of use cases.

However, dedicated infrastructure is conventionally needed to fulfill the technology requirements and to operate such real time localization systems, such as robust connectivity of the positioning system and low latency communication. Furthermore, manual installation processes and/or positioning processes are required for setting up such real-time localization systems. This might lead to costly setup procedures and/or to costly and dedicated installations.

### SUMMARY

An object of the present invention is to provide a technically simple, effective and cost effective solution for
-- setting up a real-time localization system within a predefined area or region using a positioning server entity or functionality and a mobile communication network, and/or
-- for generating and/or providing a positioning information regarding a plurality of objects within a predefined area or region using a positioning server entity or functionality and a mobile communication network, wherein a plurality of positioning base station entities are located within the predefined area or region and wherein each of the plurality of positioning base station entities comprises a global navigation satellite system receiver functionality and a real-time kinematic positioning functionality, wherein the position of a specific object is able to be determined, using at least one positioning base station entity. A further object of the present invention is to provide a system or mobile communication network for setting up a real-time localization system and/or for generating and/or providing a positioning information regarding a plurality of objects within a predefined area or region, a positioning server entity or functionality or network-based positioning service as part of such a system, and a corresponding program and computer-readable medium.

The object of the present invention is achieved by a method for setting up a real-time localization system and/or for generating and/or providing a positioning information regarding a plurality of objects, wherein, in a predefined area or region, a positioning server entity or functionality and a mobile communication network is used, wherein the plurality of objects comprises at least one specific object, wherein a plurality of positioning base station entities are located within the predefined area or region and wherein each of the plurality of positioning base station entities comprises a global navigation satellite system receiver functionality and a real-time kinematic positioning functionality, wherein the position of the specific object is able to be determined, using at least one positioning base station entity, by means of radiofrequency, optical and/or acoustical signals between the specific object and the at least one positioning base station entity, wherein, in order to set up a real-time localization system and/or to generate and/or provide a positioning information regarding a plurality of objects, the method comprises the following steps:
-- in a first step, the plurality of positioning base station entities are installed and the plurality of positioning base station entities and the positioning server entity or functionality are connected to or are part of the mobile communication network,
-- in a second step, the position of each of the plurality of positioning base station entities is determined using the global navigation satellite system receiver functionality and the real-time kinematic positioning functionality.

It is thereby advantageously possible according to the present invention, to not only use the mobile communication network in order to provide for the generation and/or provision of positioning information (especially very precise and accurate positioning information, and especially a real-time location service), but also to be able to set up the real-time localization system in a more effective manner, especially without the need to manually determine the positions of the positioning base station entities. By means of each of the plurality of positioning base station entities comprising a global navigation satellite system receiver functionality and a real-time kinematic positioning functionality, it is advantageously possible, according to the present invention, to comparatively easily and quickly realize such a positioning functionality, without the need to manually determine the position of each of the plurality of positioning base station entities; by means of using the real-time kinematic positioning functionality, it is advantageously possible, according to the present invention, to automatically determine a precise location of each of the positioning base station entities. Furthermore, the (typically costly) need to not only install the dedicated (especially wiring) infrastructure but as well to provide for a robust connectivity and low latency communication between the different infrastructure items can be circumvented; according to the present invention, such a connectivity and/or low latency communication is able to be provided by the mobile communication network, and, especially according to the present invention, a public land mobile network is used as the mobile communication network.
Hence, according to the present invention, it is advantageously possible to provide for a method for setting up a real-time localization system within a predefined area or region using a positioning server entity or functionality and mobile communication network; furthermore, it is advantageously possible to provide for the use of such a system, i.e. to provide for a method for generating and/or providing a positioning information regarding a plurality of objects within a predefined area or region using a positioning server entity or functionality and a mobile communication network.

It is conventionally known to use various proprietary and/or ultra-wideband-based, UWB-based, real-time location services. For high-precision localization, these systems typically use and apply a dedicated infrastructure to locate objects, especially movable objects, so-called tags, within a defined service area. This service area can be indoors, such as in production environments, or outdoors, when applied, e.g., for sports events or other outdoor campuses. In all these conventionally known systems, several ultra-wideband base stations, often called satellites or sensors, cover the service area and receive radio signals from transmitting tags, i.e. the objects. Such radio signals are typically simultaneously received by more than one such ultra-wideband base station and are forwarded to the central positioning server that typically calculates the position of the respective tags (or objects) based on this information. In such conventionally known systems, often the connectivity infrastructure (or providing the connectivity of the infrastructure base stations) to be set-up and maintained between the ultra-wideband base stations and the positioning server is one of the main cost drivers of this conventional approach, especially in case that wireline connectivity, such as provided by a local area networks, is applied. The reason is typically that such a connectivity infrastructure is a dedicated connectivity infrastructure provided specifically for the localization service.

According to the present invention, a dedicated connectivity infrastructure (between the plurality of positioning base station entities and the positioning server entity or functionality) is not required as the communication services of the available public mobile communication network for these connectivity requirements allows to reduce the local installation costs.
Furthermore according to the present invention, it is advantageously possible that - by means of each of the plurality of positioning base station entities comprising a global navigation satellite system receiver functionality and a real-time kinematic positioning functionality - any modification regarding the respective positions of the positioning base station entities is able to be automatically determined and/or taken in to consideration for performing positioning of the plurality of objects within the predefined area or region: Especially, it is advantageously possible to provide for the possibility of an easy and quick restart of the positioning functionality in case that an intentional modification of the position of one positioning base station entity or of a plurality positioning base station entities (e.g. due to a reconfiguration of the positioning system) occurred. Furthermore, likewise in case of a non-intentional modification (e.g. due to an accident or the like) of the position of a positioning base station entity, this is able to be taken into consideration for the positioning of the plurality of objects.

According to the present invention, it is advantageously possible and preferred that, in order to generate and/or to provide a positioning information regarding a plurality of objects, in a third step, the position of the specific object is determined, at least partly or preliminarily, using the at least one positioning base station entity, and wherein, in a fourth step, the position of the specific object is communicated to or completely generated by the positioning server entity or functionality, wherein especially - subsequent to the fourth step - the second step is repeated by means of determining the position of at least part of the plurality of positioning base station entities.

It is thereby advantageously possible, according to the present invention, to use an inventive system in view of providing pieces of positioning information regarding the plurality of objects (within the predefined area or region).
Especially by means of repeating the second step, it is furthermore advantageously possible according to the present invention that, in case that the locations of the positioning base station entities having (or have been) changed (e.g., due to an attempt to improve system coverage, etc.), the second step is triggered explicitly again, e.g. as a one-time event (in order to apply a recalibration of the system after a modification), or even as a repeated event.

According to the present invention, it is furthermore advantageously possible and preferred that each of the plurality of positioning base station entities comprises a user equipment entity or functionality acting as a user equipment with regard to the mobile communication network, wherein the user equipment entity or functionality especially corresponds to a user equipment entity or functionality according to the 5G standard or according to the LTE (long term evolution) standard, and wherein the mobile communication network especially corresponds to a mobile communication network according to the 5G standard or according to the LTE (long term evolution) standard, and especially corresponds to a public network.

It is thereby advantageously possible that - by means of the user equipment entity or functionality of the positioning base station entities acting as user equipment with regard to the mobile communication network - after having physically installed, and positioned, the plurality of positioning base station entities in or adjacent to the predefined area or region, it is already possible to provide the positioning or localization service because the plurality of positioning base station entities are connected, using the (especially public) mobile communication network, among each other and/or with the positioning server entity or functionality.

According to the present invention, it is furthermore advantageously possible and preferred that the positioning server entity or functionality is realized or provided by the mobile communication service, wherein especially the positioning server entity or functionality is provided as a cloud service and/or located at a network edge of the mobile communication network.

Of course, the positioning server entity or functionality could also be realized (or provided) outside of the mobile communication network (but accessible via the mobile communication network). However, by means of realizing or providing the positioning server entity or functionality by the mobile communication network, it is advantageously possible to even provide for a better connectivity and/or to further reduce any latencies. Especially, a scenario is advantageous and preferred according to the present invention, where the network operator of the mobile communication network also provides the positioning service (related to or performed by the positioning server entity or functionality), i.e. in addition to the service providing the connectivity between the positioning base station entities and the positioning server entity or functionality. Alternatively, a scenario is advantageous and preferred according to the present invention, where the network operator of the mobile communication network only provides the connectivity between the positioning base station entities and the positioning server entity or functionality, and the positioning service (related to or performed by the positioning server entity or functionality) is provided by a third party.

According to the present invention, it is furthermore advantageously possible and preferred that the generation and/or the provision of the positioning information regarding the plurality of objects is conducted as a network-based positioning service of the mobile communication network.

Furthermore, it is advantageously possible and preferred according to the present invention that both the plurality of objects and the positioning base station entities interact according to the ultra-wideband standard or ultra-wideband technology, wherein the position of the specific object is determined, using at least one positioning base station entity but preferably more than one and especially at least three positioning base station entities, by means of radiofrequency signals between the specific object and the positioning base station entities.

Furthermore, it is advantageously possible and preferred according to the present invention that the mobile communication network and/or the positioning server entity or functionality comprises a real-time kinematic positioning entity or functionality, wherein especially the position of each of the plurality of positioning base station entities is automatically determined, wherein especially each of the plurality of positioning base station entities connects to the network-based positioning service and/or to the positioning server entity or functionality autonomously, especially upon being started.

Thereby, it is advantageously possible to comparatively easily and/or quickly provide the inventive positioning service by means of the mobile communication network and/or the positioning server entity or functionality comprising a real-time kinematic positioning entity or functionality.

Furthermore, it is advantageously possible and preferred according to the present invention that, during or after the second step, the each one of the plurality of objects are paired with
-- each of the plurality of positioning base station entities and/or
-- the network-based positioning service or the positioning server entity or functionality, wherein such pairing is especially conducted according to at least one out of the following:
-- by means of preconfigured configuration information in the positioning base station entities and the plurality of objects,
-- by means of manual or automatic pairing between the positioning base station entities and the plurality of objects,
-- by means of remote pairing via the network-based positioning service and/or the positioning server entity or functionality, especially by means of a dedicated tag identifier information being linked to the predefined area or region and/or the plurality of positioning base station entities.

Furthermore, the present invention relates to a system or to a mobile communication network for setting up a real-time localization system and/or for generating and/or providing a positioning information regarding a plurality of objects (20), wherein in a predefined area or region (10) a positioning server entity or functionality (150) and the mobile communication network (100) is used, wherein the plurality of objects (20) comprises at least one specific object (21), wherein a plurality of positioning base station entities (41, 42, 43) are located within the predefined area or region (10), and wherein each of the plurality of positioning base station entities (41, 42, 43) comprises a global navigation satellite system receiver functionality and a real-time kinematic positioning functionality (49), wherein the position of the specific object (21) is able to be determined, using at least one positioning base station entity (41, 42, 43), by means of radiofrequency, optical and/or acoustical signals between the specific object (21) and the at least one positioning base station entity (41, 42, 43), wherein, in order to set up a real-time localization system and/or to generate and/or provide a positioning information regarding a plurality of objects (20), the system or mobile communication network (100) is configured such that:
-- the plurality of positioning base station entities (41, 42, 43) are installed and the plurality of positioning base station entities (41, 42, 43) and the positioning server entity or functionality (150) are connected to or are part of the mobile communication network (100),
-- in a second step, the position of each of the plurality of positioning base station entities (41, 42, 43) is determined using the global navigation satellite system receiver functionality and the real-time kinematic positioning functionality (49).

Furthermore, the present invention relates to a positioning server entity or functionality or network-based positioning service as part of a system or a mobile communication network as part of an inventive system.

Additionally, the present invention relates to a program comprising a computer readable program code and/or a computer-readable medium comprising instructions, which, when executed on a computer and/or on a positioning base station entity and/or on a positioning server entity or functionality and/or a network-based positioning service, or in part on a positioning base station entity and/or in part on a positioning server entity or functionality and/or in part on a network-based positioning service, causes the computer and/or the positioning base station entity and/or the positioning server entity or functionality and/or the network-based positioning service to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

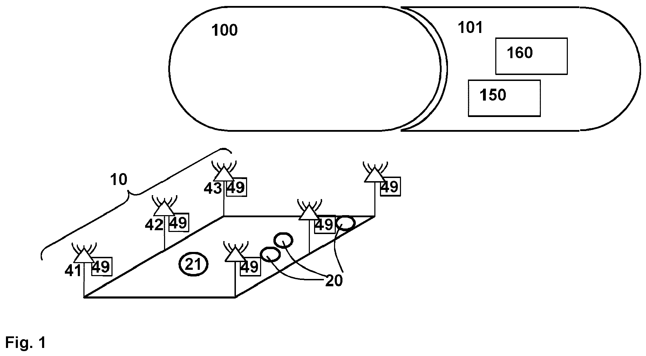

Figure 1 schematically illustrates a predefined area or region comprising a plurality of objects, and especially a specific object thereof together with an inventive system comprising a plurality of positioning base station entities that are located within the predetermined area or region, wherein Figure 1 additionally represents a positioning server entity or functionality and a mobile communication network.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a predefined area or region 10 is schematically shown, the predefined area or region 10 comprising a plurality of objects 20, and especially a specific object 21 as part thereof together with an inventive system comprising a plurality of positioning base station entities that are located within the predetermined area or region 10. In the exemplary embodiment or scenario shown in Figure 1 six positioning base station entities are shown, three of which being designated by reference signs 41, 42, and 43 (i.e. a first positioning base station entity 41, a second positioning base station entity 42, and a third positioning base station entity 43). Figure 1 additionally represent a mobile communication network 100 and a positioning server entity or functionality 150. Especially, the positioning server entity or functionality 150 is part of other network services 101 of the mobile communication network 100 or a partner network. Alternatively to the positioning server entity or functionality 150 being part of the mobile communication network 100 or of its other network services 101, the positioning server entity or functionality 150 is associated to the mobile communication network 100 or accessible via the mobile communication network 100.

According to the present invention, a positioning information regarding the plurality of objects 20, 21 is able to be generated or provided using the positioning server entity or functionality 150 as well as the mobile communication network 100. The plurality of objects 20, 21 and especially the specific object 21 are located within the predefined area or region 10, and the plurality of positioning base station entities 41, 42, 43 are likewise located within the predefined area or region 10 or at least - in case one or a plurality of the positioning base station entities 41, 42, 43 are located outside of the predefined area or region 10 - in the vicinity of the predefined area or region 10, i.e. in a distance, at maximum, to the predefined area or region 10 of a couple of 100 meters or one or two kilometers. Figure 1 exemplarily represents an embodiment of a system according to the present invention by means of which it is possible to conduct the inventive method. The embodiment shown in Figure 1 shows the positioning base station entities 41, 42, 43 comprising, respectively, a global navigation satellite system receiver functionality and a real-time kinematic positioning functionality 49. Furthermore, the mobile communication network 100 and/or the positioning server entity or functionality 150 is shown to comprise a real-time kinematic positioning entity or functionality 160.

According to the present invention, the position of the specific object 21 is able to be determined, using at least one positioning base station entity 41, 42, 43, by means of radiofrequency, optical and/or acoustical signals between the specific object 21 and the at least one positioning base station entity 41, 42, 43.
According to the present invention each of the plurality of positioning base station entities 41, 42, 43 comprises a global navigation satellite system receiver functionality and a real-time kinematic positioning functionality 49.
In order to set up the real-time localization system and/or (especially, after setup of such system) to generate and/or provide a positioning information regarding a plurality of objects 20, 21, in a first step, the plurality of positioning base station entities 41, 42, 43 are installed and the plurality of positioning base station entities 41, 42, 43 and the positioning server entity or functionality 150 are connected to or are part of the mobile communication network 100. In a second step, the position of each of the plurality of positioning base station entities 41, 42, 43 is determined using the global navigation satellite system receiver functionality and the real-time kinematic positioning functionality 49.
Thereby, the positions and/or locations of the positioning base station entities 41, 42, 43 are able to be determined automatically, and especially more quickly - both in case of the initial setup of the positioning system and in case of a modification (intentionally or non-intentionally) of the positioning system.

It is preferred according to the present invention that, in order to generate and/or to provide a positioning information regarding the plurality of objects 20 (especially the specific object 21), in a third step, the position of the specific object 21 is determined, at least partly or preliminarily, using the at least one positioning base station entity 41, 42, 43, and, in a fourth step, the position of the specific object 21 is communicated to or completely generated by the positioning server entity or functionality 150.
Especially, the positioning server entity or functionality 150 is realized or provided by the mobile communication network 100, especially as a cloud service and/or located at a network edge of the mobile communication network 100, and the generation and/or the provision of the positioning information regarding the plurality of objects 20, 21 is conducted as a network-based positioning service of the mobile communication network 100.

Furthermore especially, according to the present invention, each one of the plurality of positioning base station entities 41, 42, 43 comprises a user equipment entity or functionality acting as a user equipment with regard to the mobile communication network 100. Especially, the user equipment entity or functionality corresponds to a user equipment entity or functionality according to the 5G standard, and likewise especially the mobile communication network 100 corresponds to a mobile communication network 100 according to the 5G standard, and especially corresponds to a public network, i.e. is a public land mobile network. It is thereby advantageously possible, according to the present invention, that - by means of positioning, in or adjacent to the predefined area or region 10, the positioning base station entities 41, 42, 43 having or comprising the user equipment entity or functionality with regard to the mobile communication network 100 - a positioning network is able to be comparatively easily and/or quickly established.

Hence, with the availability of the mobile communication network 100, especially being a high performance public mobile communication network, especially applying 5G or according to the LTE (long term evolution) standard or subsequent technology, the service of real-time location is able to be provided via the public network at minimal installation costs.

Especially according to the present invention (and as shown in Figure 1), the inventive method and system concept relies on ultra-wideband base stations (positioning base station entities 41, 42, 43) being equipped with 5G modems (or user equipment entities or functionalities of the mobile communication network 100) providing connectivity via the (especially public) mobile network (mobile communication network 100). By applying 5G connectivity, the improvements of the new radio standard (according to the 3GPP specifications) are fostered, i.e. robust communication links and low latency via the radio interface.
In this approach, the positioning server service is able to be provided by the operator network (i.e. the mobile communication network 100). It may be located in the operator cloud, or, when specific network latency requirements have to be fulfilled, at the network edge.

It is especially advantageous, according to the present invention, that by configuring the distinct operator network-based positioning service in the ultra-wideband base stations (positioning base station entities) upfront (i.e. by means of providing an initial configuration), a plug and play experience is able to be obtained, i.e. the positioning service is able to set up quickly; at start-up, each ultra-wideband base station (or positioning base station entity 41, 42, 43) will connect to this positioning server (i.e. the positioning server entity or functionality 150) according to such configuration, i.e. autonomously. Especially according to the present invention, it is advantageously possible that the positions and/or locations of the positioning base station entities 41, 42, 43 are able to be determined automatically, and especially more quickly - both in case of the initial setup of the positioning system and in case of a modification (intentionally or non-intentionally) of the positioning system:
For setting up a distinct geo-fence (or predefined area or region 10) covered by multiple UWB base stations, their static positions have to be provided to the positioning service to configure the geographical area covered. According to the present invention, this is done automatically, by means of the global navigation satellite system receiver functionality and/or the real-time kinematic positioning functionality 49 (within each of the positioning base station entities 41, 42, 43) determining the respective position, and the positioning base station entity 41, 42, 43 transmitting this information, or part thereof, to the mobile communication network 100, i.e. especially to the positioning server entity or functionality 150 and/or the real-time kinematic positioning entity or functionality 160. Thereby, the position of each of the positioning base station entities 41, 42, 43 is able to be determined in a very precise manner, and this service is also provided by the network, i.e. the mobile communication network 100, (in addition to a basic global navigation satellite system service). By this, each ultra-wideband base station (or positioning base station entity 41, 42, 43) is capable to retrieve its static location in a very precise manner (especially down to the cm-level) and provide it to the positioning server (or positioning server entity or functionality 150) at system start-up.

After system set-up, the ultra-wideband tags (i.e. the plurality of objects 20, 21) served by this geo-fence need to be paired with the serving ultra-wideband base stations (or positioning base station entities 41, 42, 43). Different approaches are able to be applied, i.e. at least one out of the following:
-- preconfigured both in ultra-wideband base stations 41, 42, 43 and tags (objects 20, 21);
-- manual pairing or automatic between ultra-wideband base station 41, 42, 43 and tag (objects 20, 21);
-- remote pairing via the operator positioning service (positioning server entity or functionality 150): a dedicated tag ID is linked to a geo-fence covered by the ultra-wideband base stations known.

According to the present invention, the actual positioning operation (i.e. the determination of the position of the specific object 21) typically involves (in case that the ultra-wideband standard or an ultra-wideband technology is used) using at least one positioning base station entity 41, 42, 43 but preferably more than one and especially at least three positioning base station entities 41, 42, 43 (typically using triangulation techniques), by means of radiofrequency signals between the specific object 21 and the positioning base station entities 41, 42, 43.

Hence, according to the present invention, UWB base stations (or positioning base station entities 41, 42, 43) are equipped with 4G or 5G modules (or routers) providing connectivity via the public mobile network. In addition, the UWB base stations (or positioning base station entities 41, 42, 43) are equipped with an RTK module, serving the satellite-based precise positioning service. By this, each UWB base station (or positioning base station entity 41, 42, 43) is capable to evaluate its static location down to cm-level or lower and provide it to the positioning server at start-up.

Instead of manual identification/measurement of the actual UWB base station locations (or positioning base station entities 41, 42, 43), the UWB base station provide their exact location information automatically and online making use of the existing 4G or 5G connection to the positioning server. According to the present invention, this can be performed, according to one variant of the present invention, only once (i.e. during system set-up), or, according to another variant of the present invention, more than once (i.e. the second step is repeated after the third and fourth step) during system operation, or, according to still another variant of the present invention, repeatedly or periodically during system operation. In the latter two cases, the system is able to automatically react on small or major (especially unintentional) shifts in UWB base station locations which would typically go undetected in case of only manual determination of the positions of the positioning base station entities but could negatively influence the overall performance of the real-time location system (RTLS), i.e., the resulting tag positioning accuracy will be worse.

According to the present invention, the one-time set-up (i.e. determination of the positions of the base station entities 41, 42, 43) exemplarily follows the following processing steps:
In a first processing step occurs the installation of the UWB base stations 41, 42, 43 equipped with 4G or 5G connectivity and RTK module (for Precise Positioning service); this typically involves a pairing step between the UWB base stations or positioning base station entities 41, 42, 43 and the RTK module;
In a second processing step, the UWB base stations obtain their exact positions from the Precise Positioning service and automatically provide this information to the management function of the positioning server (i.e. this information is provided automatically according to the present invention, and - in contrast to conventionally known systems - there is no need for a surveyor or operator to manually feed this information to the positioning server); according to an alternative implementation of the first and/or second processing step, the UWB base station 41, 42, 43 "does not know" that it has an RTK module: then the RTK module independently reports to the positioning server via the mobile communication module (i.e. the user equipment entity or functionality acting as a user equipment with regard to the mobile communication network) and paring is to be performed; in this case either the RTK module "knows its" UWB base station, then it communicates the associated UWB base station identifier with the measurement results to the positioning server, or, alternatively, the RTK module "does not know its" UWB base station, then pairing is to be performed by the positioning server: this can be done by the UWB base station and the RTK module reporting via the same mobile communication module.
In a third processing step, the UWB base stations and positioning server calibrate the RTLS service;
In a fourth processing step, the normal operation of the real-time location system, RTLS, is performed, where the positions of tags are calculated by the positioning server based on the measurements received from the UWB base stations 41, 42, 43.
In case the locations of the UWB base stations 41, 42, 43 have to be changed (e.g., when to improve system coverage, etc.), the second processing step has to be triggered explicitly again, e.g. once.
In case of periodic UWB base station location updates, the system is able to react dynamically on system modifications, planned or even unplanned. In this approach, the second and third processing steps are not only carried solely at system set-up (or when triggered manually), but these processing steps run in parallel to normal operation of the system. Thereby, especially management tasks and operational tasks run in parallel: The management tasks of the positioning server especially comprise continuously monitoring for UWB base station locations update, either triggered by initial set up, or triggered sporadically or irregularly (e.g. by in-build motion detection), or triggered periodically.
It is especially preferred according to the present invention that, in case that the location of at least one UWB base station 41, 42, 43 has been modified, the UWB base stations 41, 42, 43 and the positioning server (re-)calibrates the RTLS service.
The operational tasks of the positioning server especially comprise the normal operation of the RTLS where the positions of tags are calculated by the positioning based on the measurements received from the UWB base stations 41, 42, 43.

By the continuous monitoring of UWB base station locations according to the present invention, the positioning service is able to derive extra benefits beyond those of one-time positioning measurements: it is able to eliminate inaccuracies of the RTK-based positioning service by observing the slight changes UWB base station location information over time, i.e. the in-build inaccuracies of RTK-service, - since almost all of the time the location of the UWB base stations is static. As a result, the obtained UWB base station locations become even more accurate over time.

## Claims

1. Method for setting up a real-time localization system and/or for generating and/or providing a positioning information regarding a plurality of objects (20), wherein in a predefined area or region (10) a positioning server entity or functionality (150) and a mobile communication network (100) is used, wherein the plurality of objects (20) comprises at least one specific object (21), wherein a plurality of positioning base station entities (41, 42, 43) are located within the predefined area or region (10) and wherein each of the plurality of positioning base station entities (41, 42, 43) comprises a global navigation satellite system receiver functionality and a real-time kinematic positioning functionality (49), wherein the position of the specific object (21) is able to be determined, using at least one positioning base station entity (41, 42, 43), by means of radiofrequency, optical and/or acoustical signals between the specific object (21) and the at least one positioning base station entity (41, 42, 43), wherein, in order to set up a real-time localization system and/or to generate and/or provide a positioning information regarding a plurality of objects (20), the method comprises the following steps:
-- in a first step, the plurality of positioning base station entities (41, 42, 43) are installed and the plurality of positioning base station entities (41, 42, 43) and the positioning server entity or functionality (150) are connected to or are part of the mobile communication network (100),
-- in a second step, the position of each of the plurality of positioning base station entities (41, 42, 43) is determined using the global navigation satellite system receiver functionality and the real-time kinematic positioning functionality (49).

2. Method according to claim 1, wherein, in order to generate and/or to provide a positioning information regarding a plurality of objects (20), in a third step, the position of the specific object (21) is determined, at least partly or preliminarily, using the at least one positioning base station entity (41, 42, 43), and wherein, in a fourth step, the position of the specific object (21) is communicated to or completely generated by the positioning server entity or functionality (150), wherein especially - subsequent to the fourth step - the second step is repeated by means of determining the position of at least part of the plurality of positioning base station entities (41, 42, 43).

3. Method according to one of the preceding claims, wherein each of the plurality of positioning base station entities (41, 42, 43) comprises a user equipment entity or functionality acting as a user equipment with regard to the mobile communication network (100), wherein the user equipment entity or functionality especially corresponds to a user equipment entity or functionality according to the 5G standard, and wherein the mobile communication network (100) especially corresponds to a mobile communication network (100) according to the 5G standard, and especially corresponds to a public network.

4. Method according to one of the preceding claims, wherein the positioning server entity or functionality (150) is realized or provided by the mobile communication network (100), wherein especially the positioning server entity or functionality (150) is provided as a cloud service and/or located at a network edge of the mobile communication network (100).

5. Method according to one of the preceding claims, wherein the generation and/or the provision of the positioning information regarding the plurality of objects (20) is conducted as a network-based positioning service of the mobile communication network (100).

6. Method according to one of the preceding claims, wherein both the plurality of objects (20) and the positioning base station entities (41, 42, 43) interact according to the ultra-wideband standard or ultra-wideband technology, wherein the position of the specific object (21) is determined, using at least one positioning base station entity (41, 42, 43) but preferably more than one and especially at least three positioning base station entities (41, 42, 43), by means of radiofrequency signals between the specific object (21) and the positioning base station entities (41, 42, 43).

7. Method according to one of the preceding claims, wherein the mobile communication network (100) and/or the positioning server entity or functionality (150) comprises a real-time kinematic positioning entity or functionality (160),
wherein especially the position of each of the plurality of positioning base station entities (41, 42, 43) is automatically determined,
wherein especially each of the plurality of positioning base station entities (41, 42, 43) connects to the network-based positioning service and/or to the positioning server entity or functionality (150) autonomously, especially upon being started.

8. Method according to one of the preceding claims, wherein, during or after the second step, the each one of the plurality of objects (20) are paired with
-- each of the plurality of positioning base station entities (41, 42, 43) and/or
-- the network-based positioning service or the positioning server entity or functionality (150),
wherein such pairing is especially conducted according to at least one out of the following:
-- by means of preconfigured configuration information in the positioning base station entities (41, 42, 43) and the plurality of objects (20),
-- by means of manual or automatic pairing between the positioning base station entities (41, 42, 43) and the plurality of objects (20),
-- by means of remote pairing via the network-based positioning service and/or the positioning server entity or functionality (150), especially by means of a dedicated tag identifier information being linked to the predefined area or region (10) and/or the plurality of positioning base station entities (41, 42, 43).

9. System or mobile communication network (100) for setting up a real-time localization system and/or for generating and/or providing a positioning information regarding a plurality of objects (20), wherein in a predefined area or region (10) a positioning server entity or functionality (150) and the mobile communication network (100) is used, wherein the plurality of objects (20) comprises at least one specific object (21), wherein a plurality of positioning base station entities (41, 42, 43) are located within the predefined area or region (10), and wherein each of the plurality of positioning base station entities (41, 42, 43) comprises a global navigation satellite system receiver functionality and a real-time kinematic positioning functionality (49), wherein the position of the specific object (21) is able to be determined, using at least one positioning base station entity (41, 42, 43), by means of radiofrequency, optical and/or acoustical signals between the specific object (21) and the at least one positioning base station entity (41, 42, 43), wherein, in order to set up a real-time localization system and/or to generate and/or provide a positioning information regarding a plurality of objects (20), the system or mobile communication network (100) is configured such that:
-- the plurality of positioning base station entities (41, 42, 43) are installed and the plurality of positioning base station entities (41, 42, 43) and the positioning server entity or functionality (150) are connected to or are part of the mobile communication network (100),
-- in a second step, the position of each of the plurality of positioning base station entities (41, 42, 43) is determined using the global navigation satellite system receiver functionality and the real-time kinematic positioning functionality (49).

10. Positioning server entity or functionality (150) or network-based positioning service as part of a system or a mobile communication network (100) according to claim 8.

11. Program comprising a computer readable program code, which, when executed on a computer and/or on a positioning base station entity (41, 42, 43) and/or on a positioning server entity or functionality (150) and/or a network-based positioning service, or in part on a positioning base station entity (41, 42, 43) and/or in part on a positioning server entity or functionality (150) and/or in part on a network-based positioning service, causes the computer and/or the positioning base station entity (41, 42, 43) and/or the positioning server entity or functionality (150) and/or the network-based positioning service to perform a method according one of claims 1 to 8.

12. Computer-readable medium comprising instructions which when executed on a computer and/or on a positioning base station entity (41, 42, 43) and/or on a positioning server entity or functionality (150) and/or a network-based positioning service, or in part on a positioning base station entity (41, 42, 43) and/or in part on a positioning server entity or functionality (150) and/or in part on a network-based positioning service, causes the computer and/or the positioning base station entity (41, 42, 43) and/or the positioning server entity or functionality (150) and/or the network-based positioning service to perform a method according one of claims 1 to 8.

## Amended claims

### Amended claims in accordance with Rule 137(2) EPC.

1. Method for setting up a real-time localization system and/or for providing a positioning information regarding a plurality of objects (20), wherein in a predefined area (10) a positioning server entity or functionality (150) and a mobile communication network (100) is used, wherein the plurality of objects (20) comprises at least one specific object (21), wherein a plurality of ground installed positioning base station entities (41, 42, 43) are located within the predefined area (10) and wherein each of the plurality of positioning base station entities (41, 42, 43) comprises a global navigation satellite system receiver functionality and a real-time kinematic positioning functionality (49), wherein the position of the specific object (21) is able to be determined, using at least one positioning base station entity (41, 42, 43), by means of radiofrequency, optical or acoustical signals between the specific object (21) and the at least one positioning base station entity (41, 42, 43), wherein, in order to set up a real-time localization system and/or to provide a positioning information regarding a plurality of objects (20), the method is **characterized by** the following steps:
-- in a first step, the plurality of positioning base station entities (41, 42, 43) are installed and the plurality of positioning base station entities (41, 42, 43) and the positioning server entity or functionality (150) are connected to or are part of the mobile communication network (100),
-- in a second step, the position of each of the plurality of positioning base station entities (41, 42, 43) is determined using the global navigation satellite system receiver functionality and the real-time kinematic positioning functionality (49).

2. Method according to claim 1, wherein, in order to provide a positioning information regarding a plurality of objects (20), in a third step, the position of the specific object (21) is determined using the at least one positioning base station entity (41, 42, 43), and wherein, in a fourth step, the position of the specific object (21) is communicated to or completely generated by the positioning server entity or functionality (150),
wherein especially - subsequent to the fourth step - the second step is repeated by means of determining the position of at least part of the plurality of positioning base station entities (41, 42, 43).

3. Method according to one of the preceding claims, wherein each of the plurality of positioning base station entities (41, 42, 43) comprises a user equipment entity or functionality acting as a user equipment with regard to the mobile communication network (100), wherein the user equipment entity or functionality especially corresponds to a user equipment entity or functionality according to the 5G standard, and wherein the mobile communication network (100) especially corresponds to a mobile communication network (100) according to the 5G standard, and especially corresponds to a public network.

4. Method according to one of the preceding claims, wherein the positioning server entity or functionality (150) is realized or provided by the mobile communication network (100), wherein especially the positioning server entity or functionality (150) is provided as a cloud service and/or located at a network edge of the mobile communication network (100).

5. Method according to one of the preceding claims, wherein the provision of the positioning information regarding the plurality of objects (20) is conducted as a network-based positioning service of the mobile communication network (100).

6. Method according to one of the preceding claims, wherein both the plurality of objects (20) and the positioning base station entities (41, 42, 43) interact according to the ultra-wideband standard or ultra-wideband technology, wherein the position of the specific object (21) is determined, using at least one positioning base station entity (41, 42, 43) but preferably more than one and especially at least three positioning base station entities (41, 42, 43), by means of radiofrequency signals between the specific object (21) and the positioning base station entities (41, 42, 43).

7. Method according to one of the preceding claims, wherein the mobile communication network (100) and/or the positioning server entity or functionality (150) comprises a real-time kinematic positioning entity or functionality (160),
wherein especially the position of each of the plurality of positioning base station entities (41, 42, 43) is automatically determined,
wherein especially each of the plurality of positioning base station entities (41, 42, 43) connects to the network-based positioning service and/or to the positioning server entity or functionality (150) autonomously, especially upon being started.

8. Method according to one of the preceding claims, wherein, during or after the second step, the each one of the plurality of objects (20) are paired with
-- each of the plurality of positioning base station entities (41, 42, 43) and/or
-- the network-based positioning service or the positioning server entity or functionality (150),
wherein such pairing is especially conducted according to at least one out of the following:
-- by means of preconfigured configuration information in the positioning base station entities (41, 42, 43) and the plurality of objects (20),
-- by means of manual or automatic pairing between the positioning base station entities (41, 42, 43) and the plurality of objects (20),
-- by means of remote pairing via the network-based positioning service and/or the positioning server entity or functionality (150), especially by means of a dedicated tag identifier information being linked to the predefined area (10) and/or the plurality of positioning base station entities (41, 42, 43).

9. System for setting up a real-time localization system and/or for providing a positioning information regarding a plurality of objects (20), wherein the system comprises a mobile communication network (100), a positioning server entity or functionality (150), and a plurality of ground installed positioning base station entities (41, 42, 43), wherein the plurality of objects (20) comprises at least one specific object (21), wherein the plurality of positioning base station entities (41, 42, 43) are located within a predefined area (10), and wherein each of the plurality of positioning base station entities (41, 42, 43) comprises a global navigation satellite system receiver functionality and a real-time kinematic positioning functionality (49), wherein the system is configured to determine the position of the specific object (21) using at least one positioning base station entity (41, 42, 43), by means of radiofrequency, optical or acoustical signals between the specific object (21) and the at least one positioning base station entity (41, 42, 43), wherein, in order to set up a real-time localization system and/or to provide a positioning information regarding a plurality of objects (20), the system is **characterized in that**:
-- the plurality of positioning base station entities (41, 42, 43) are configured to be installed and the plurality of positioning base station entities (41, 42, 43) and the positioning server entity or functionality (150) are configured to be connected to or are part of the mobile communication network (100),
-- the system is configured to determine the position of each of the plurality of positioning base station entities (41, 42, 43) using the global navigation satellite system receiver functionality and the real-time kinematic positioning functionality (49).

10. Positioning server entity or functionality (150) or network-based positioning service as part of a system according to claim 9.

11. Program comprising a computer readable program code, which, when executed in part on a plurality of positioning base station entities (41, 42, 43) and in part on a positioning server entity or functionality (150), causes the plurality of positioning base station entities (41, 42, 43) and the positioning server entity or functionality (150) to perform a method according one of claims 1 to 8.

12. Computer-readable medium comprising instructions which when executed in part on a plurality of positioning base station entities (41, 42, 43) and in part on a positioning server entity or functionality (150), causes the plurality of positioning base station entities (41, 42, 43) and the positioning server entity or functionality (150) to perform a method according one of claims 1 to 8.
